# EUROPEAN PATENT APPLICATION

(11) **EP 1 980 438 A1**
(43) Date of publication of application: **15.10.2008**
(21) Application number: 07425212.3
(22) Date of filing: 13.04.2007
(51) Int. Cl.: B60K 17/28

(54) **Power take off for vehicles**

(71) Applicant: PRO.DE S.r.l., 25014 Castenedolo, (BS) (IT)
(72) Inventor: Favalli, Giovanni, 25014 Castenedolo (BS) (IT)
(74) Representative: Galassi, Alessandro

(57) **Abstract**

A power take-off unit for vehicles comprises: a rotatable actuation member (2) associable coaxially to a drive shaft of an engine so as to transmit to said actuation member (2) a rotational motion; a power delivery shaft (3) operatively connected to the actuation member (2) and connectable to a user device so as to actuate the latter; transmission means (7) for transmitting the rotational motion from the actuation member (2) to the delivery shaft (3). The transmission means (7) comprise a plurality of gears associated to one another for selectively connecting the actuation member (2) to the delivery shaft (3).

## Description

The present invention relates to a power take-off unit for vehicles.

In particular, the present invention applies to vehicles provided with devices that have to be supplied with mechanical power.

The devices that can be associated to vehicles as mentioned above are for instance agricultural equipment or pumps for supplying hydraulic circuits.

The power required to supply such devices is drawn from the one generated by the engine associated to the vehicle. Such drawing is performed by the power take-off units acting in different points inside the whole vehicle.

Some of known power take-off units perform said drawing from the gearbox. In this case, a hole is made on an outer casing of the gearbox, through which hole the required power is drawn by means of a suitable gear.

Disadvantageously, such arrangement enables only limited power drawings with the vehicle in a still condition. Therefore, high-performance equipment cannot be used and power cannot be drawn from the engine with running vehicle.

In another arrangement power is drawn from a reduction gear that might be present in the vehicle. Similarly to the previous case, a hole is made on an outer casing of the reduction gear, through which hole a suitable shaft is engaged with a cardan joint so as to absorb the required mechanical power.

Though this solution enables to vary torque and rotational speed, however, it does not ensure high power drawings and such take-off unit should be preferably actuated with the vehicle in still condition.

Another disadvantage of the two solutions referred to above concerns the installation of the power take-off unit. As a matter of fact, the installation of power take-off units on the gearbox or on the reduction gear requires an invasive intervention on the outer casing and the arrangement of a suitable gear or joint.

In order to obviate the above-mentioned drawbacks, power take-off units have been conceived that perform the drawing directly from the drive shaft in an opposed position with respect to the gearbox. In particular, this solution enables to draw power both when the vehicle is still and when it is running.

In this arrangement mechanical power is generally drawn by means of a belt drive.

However, also this solution enables limited power drawings for reasons related to engine construction and to the structural size of the drive shaft in the point in which the power take-off unit is installed, and does not allow to install high-performance user devices. Moreover, in order to draw power with an acceptable reliability the drive belt should be sufficiently tensioned. That is why several maintenance interventions are required for adjusting belt tensioning. Furthermore, such operation is highly complex.

In this light the technical task of the present invention consists in proposing a power take-off unit for vehicles that is free from the drawbacks referred to above.

In particular, an aim of the present invention is to propose a power take-off unit for vehicles that enables to draw a high fraction of mechanical power, or preferably the whole power supplied by the engine.

A further aim of the invention is to carry out a power take-off unit that is flexible and can be used with the vehicle both in still and in running condition.

Another aim of the present invention is to provide a power take-off unit that does not overload the drive shaft with loads resulting from the power take-off unit itself.

A further aim of the present invention is to propose a power take-off for vehicles that has limited maintenance requirements and is easy to carry out.

The technical task and the aims referred to above are basically achieved by a power take-off unit for vehicles in accordance with one or more of the appended claims.

Further characteristics and advantages of the present invention will be more apparent from the indicative - and therefore non-limiting - description of a preferred though not exclusive embodiment of a power take-off unit for vehicles, as shown in the accompanying drawings, in which:
- Figure 1 shows a perspective view of a power take-off unit for vehicles in accordance with the present invention, some parts thereof being removed so as to point out others;

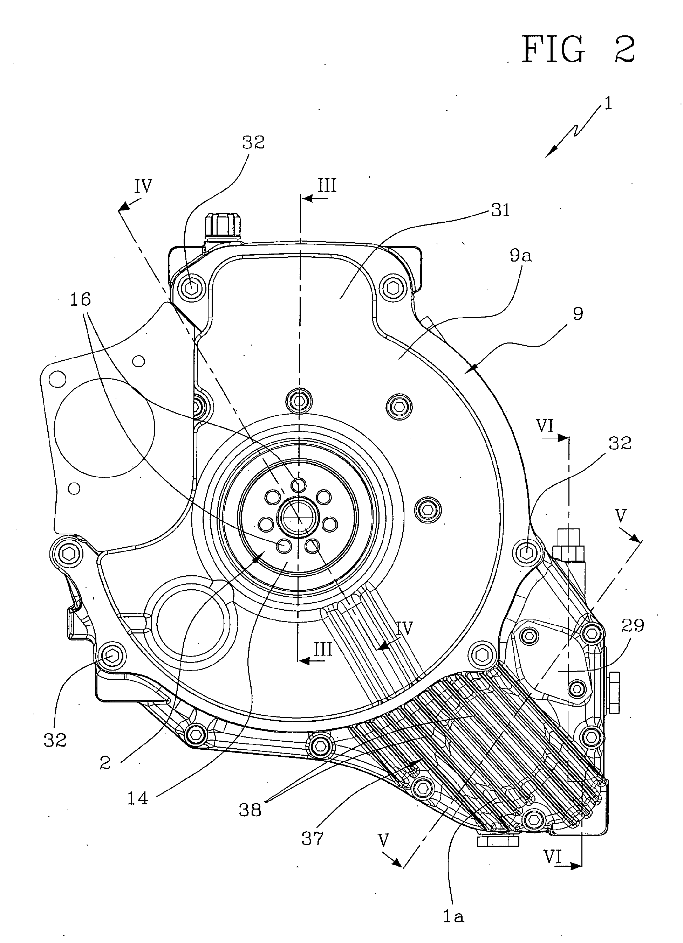

- Figure 2 shows a side view of the power take-off unit of Figure 1;
- Figure 3 shows a sectional view of the power take-off unit of Figure 1 along a section line III-III of Figure 2;
- Figure 4 shows a sectional view of the power take-off unit of Figure 1 along a section line IV-IV of Figure 2;
- Figure 5 shows a sectional view of the power take-off unit of Figure 1 along a section line V-V of Figure 2; and

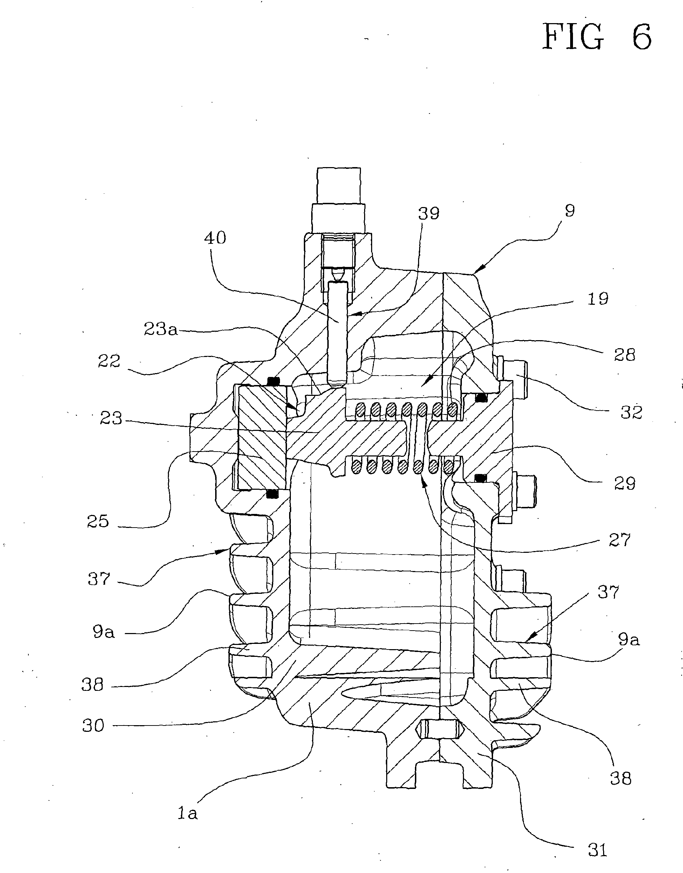

- Figure 6 shows a sectional view of the power take-off unit of Figure 1 along a section line VI-VI of Figure 2;

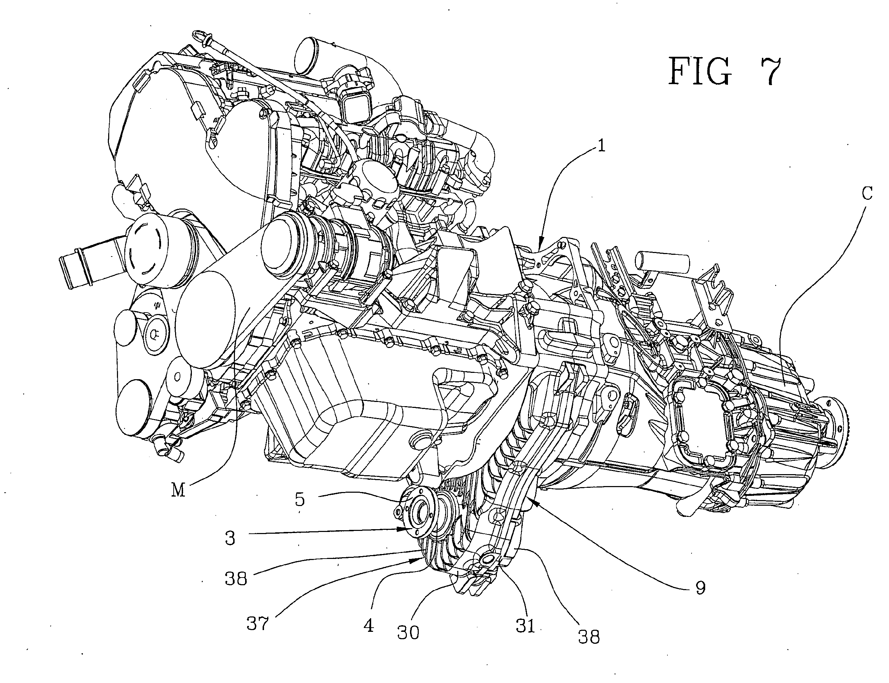

- Figure 7 shows a global perspective view of a power take-off unit in accordance with the invention installed between an engine and a gearbox shown schematically.

With reference to the accompanying figures, the numeral 1 globally refers to a power take-off unit for vehicles according to the present invention.

The power take-off unit 1 comprises an actuation member 2 rotating around its axis of rotation "A" and coaxially associable to a drive shaft (not shown as of known type) of an engine M. The drive shaft thus transmits a rotational motion (and a torque) to the actuation member 2, which draws at least a fraction of the mechanical power produced by said engine M, and potentially the whole of said power.

The power take-off unit 1 further comprises a power delivery shaft 3, rotatable around its own axis "B" and which is operatively connected to the actuation member 2 so as to deliver at least part of the fraction of mechanical power drawn from said actuation member 2. Advantageously, axis "B" is parallel to axis "A".

A user device (not shown in the figures) can be connected to the delivery shaft 3 so as to be supplied with the fraction of power delivered by said delivery shaft 3. By way of example, such user device can include agricultural or road maintenance equipment or a hydraulic pump supplying a hydraulic system.

In detail, the delivery shaft 3 comprises a connection flange 4 engaged to a first end 3a of said delivery shaft 3. The connection flange 4 comprises an interconnection portion 5 for connecting, for instance by means of a cardan joint not shown, the power take-off unit 1 to said user device.

The delivery shaft 3 comprises a grooved portion 6 arranged close to said first end 3a thereof so as to enable the stiff coupling of the connection flange 4 to the delivery shaft 3.

The operating connection between the actuation member 2 and the delivery shaft 3 is achieved by way of transmission means 7.

In particular, the transmission means 7 comprise a plurality of gears enabling an efficient transfer of motion and of mechanical power associated thereto to the delivery shaft 3.

The actuation member 2 has a basically cylindrical shape and comprises a toothed crown 8 arranged on a lateral surface 2a of said actuation member 2. The lateral surface 2a is placed radially outside with respect to the axis of rotation "A". In detail, said toothed crown 8 is connected to the transmission means 7 and comprises a plurality of teeth arranged parallel to the axis of rotation "A" of said actuation member 2.

The power take-off unit 1 further comprises a housing body 9 enclosing the actuation member 2, the delivery shaft 3 and the transmission means 7.

In further detail, the housing body 9 comprises a first 30 and a second half-shell 31 placed one beside the other so as to close the power take-off unit 1. The connection between the first 30 and the second half-shell 31 is achieved by means of a plurality of closing screws 41. The first half-shell 30 can be associated directly to the engine M, whereas the second half-shell 31 can be associated directly to the gearbox C.

Advantageously, the power take-off unit is simply placed between engine M and gearbox C, but the assembly can be mounted using the same mounting means and the same mounting points through which the engine and the gearbox are mounted without the power take-off unit.

In particular, the mounting means comprise mounting screws 32 that are the same as those used for mounting the engine M to the gearbox C, though longer so as to allow the power take-off unit to be placed between engine M and gearbox C.

Several advantages are thus achieved, such as a more compact assembly, a higher adaptability of the power take-off unit to existing engines and gearboxes without requiring substantial changes, and the fact that the structural resistance of the engine-gearbox assembly is not altered as a result of the power take-off unit being placed therebetween, since no further mounting points that might weaken the structure are added.

The actuation member 2 is turnably engaged to said housing body 9 close to at least one portion of its lateral surface 2a. Mechanical stresses from the transmission means 7 are thus transferred to said housing body 9.

As a matter of fact, during use the delivery shaft 3 can be subjected to a mechanical stress that reaches the actuation member 2 through the transmission means 7.

If the stress has a component in orthogonal direction with respect to the axis of rotation "A" of the actuation member 2, said component is transferred to the housing body 9 and cannot thus reach the drive shaft.

Advantageously, said arrangement protects the engine M from damages due to transversal stresses generated by the drive shaft, which can reach for instance bushings and damage or break them.

The rotatable engagement between the actuation member 2 and the housing body 9 is achieved by means of at least one ball bearing 10 of known type.

In the described embodiment, the power take-off unit 1 comprises two identical ball bearings 10 acting between respective shoulders 11 obtained on the lateral surface 2a of the actuation member 2 and respective housing seats 12 obtained on the housing body 9.

Said transversal component of the mechanical stress is thus transferred from the actuation member 2 to the housing body 9 by means of the ball bearings 10.

In further detail, the shoulders 11 obtained on the lateral surface 2a of the actuation member 2 are shaped with mirror symmetry with respect to a plane perpendicular to axis "A".

The actuation member 2 is thus coupled with the housing body 9 so that it is prevented from shifting along a direction parallel to its axis of rotation "A" and cannot thus generate induced loads on the drive shaft.

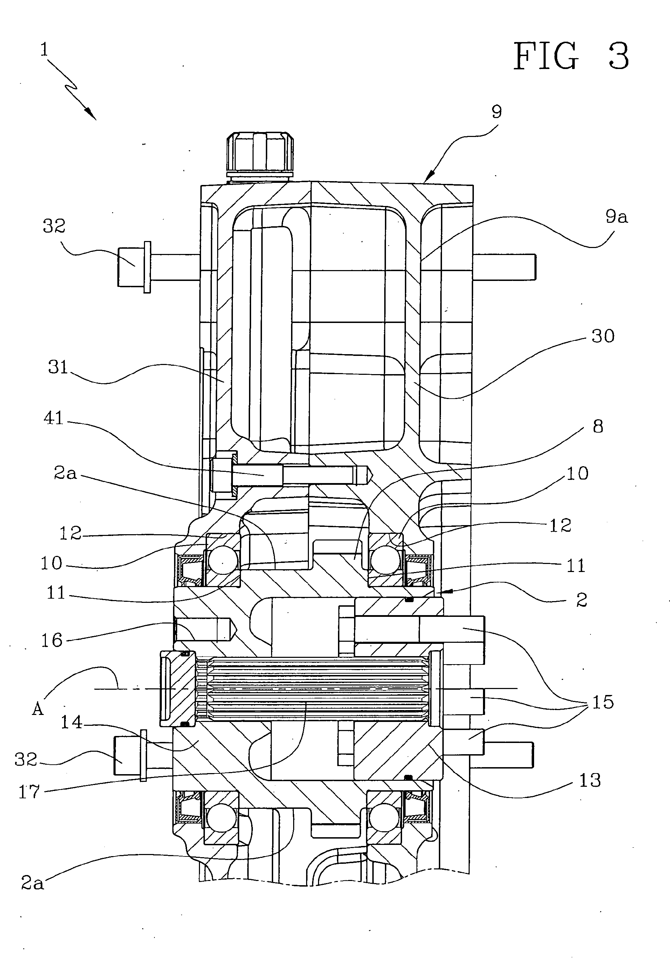

The actuation member 2 comprises a first portion 13 associable to the drive shaft of the motor (M) of the vehicle, and a second portion 14 associable to a gearbox C of the vehicle (Figure 3).

Preferably, the first portion 13 and the second portion 14 are separate from one another, associated and arranged coaxially to the axis of rotation "A" of the actuation member 2.

Advantageously, clearances existing between the two portions 13, 14 can thus make up for possible stresses existing on the actuation member 2, preventing said stresses from being transferred stiffly to the drive shaft.

Anyhow, in an alternative embodiment the actuation member 2 can also be made as one piece or in a larger number of pieces.

In further detail, the first portion 13 can be coaxially engaged to the drive shaft of the engine M of the vehicle by way of fastening means 15. For instance, the first portion 13 is equipped with a plurality of screws 15, self-blocking screws for instance, designed to engage suitable respective housings obtained in a flange of the drive shaft.

The second portion 14 can be coaxially engaged to a flywheel (not shown) of the gearbox C of the engine by means of a further plurality of screws (not shown), self-blocking screws for instance, housed in suitable seats 16 obtained on said second portion 14.

Preferably, a grooved shaft 17 connects the first 14 to the second portion 15 so that they rotate stiffly.

It is thus possible, by using grooved shafts 17 of different lengths, to easily vary the overall length of the actuation member 2 without requiring consistent structural changes to the first 14 and to the second portion 15.

In an alternative embodiment, the first 14 and the second portion 15 could be connected directly to one another.

The grooved shaft has a basically cylindrical shape and is arranged coaxially to the first and second portion and to the drive shaft. It has a plurality of grooves on the outer lateral surface, which are arranged parallel to the axis and engage respective grooves arranged on an inner lateral surface of the first and second portion. The mutual position of the first and second portion can thus be axially adjusted when mounting the unit 1.

In the described embodiment, said toothed crown 8 and the shoulders 11 are obtained on the second portion 14.

The transmission means 7 comprise a gear 18 arranged coaxially to the delivery shaft 3 and selectively associable to the latter. In further detail, the gear 18 is arranged closed to a second end 3b of the delivery shaft 3. The gear 18 is operatively connected to the actuation member 2 (in the example shown by means of at least one secondary gear 34 described below).

The power take-off unit 1 further comprises coupling means 19 mobile between a first arrangement in which the gear 18 and the delivery shaft 3 are disengaged from one another and a second arrangement in which the gear 18 and the delivery shaft 3 are engaged so as to enable power to be transmitted from the gear 18 to the shaft 3.

In particular, in the first arrangement the gear 18 (being operatively connected to the actuation member 2 and assuming that the drive shaft is rotating) freely rotates with respect to the delivery shaft 3, which is still and delivers no mechanical power. This arrangement is activated in case the user device is not required and should not be supplied.

In the second arrangement, the gear 18 is associated to the delivery shaft 3 so as to make it rotate. In this arrangement, the delivery shaft 3 can deliver mechanical power to the user device.

The coupling means 19 comprise a synchronization member 20 for synchronizing the motion of the delivery shaft 3 to the motion of the gear 18. Stated otherwise, said synchronization member 20 is required for accelerating the delivery shaft 3 until it rotates at the same angular speed as the gear 18 short before the gear 18 and the delivery shaft 3 are stiffly engaged to one another. Advantageously, the delivery shaft 3 can thus be associated also when the engine M is running.

The synchronization member 20 is mobile between a non-operating position in which the gear 18 and the delivery shaft 3 are disengaged, and an operating position in which the gear 18 and the delivery shaft 3 are engaged. In detail, the non-operating position corresponds to said first arrangement of the coupling means 19, whereas the operating position corresponds to said second arrangement of the coupling means 19.

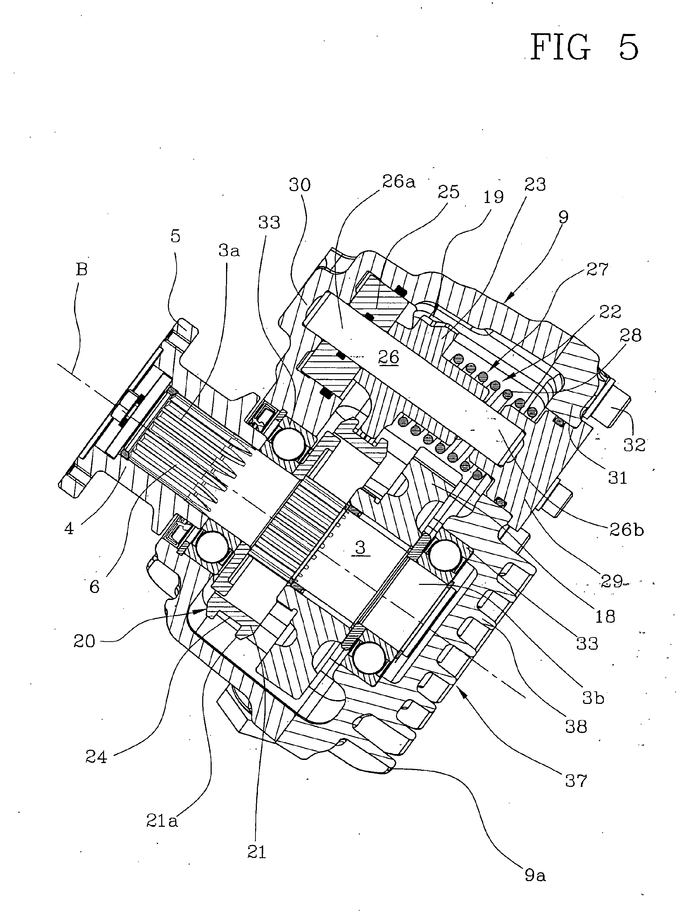

Referring in particular to Figure 5, the synchronization member 20 is represented partially since it is of known type. In particular, said figure shows a sleeve 21 carrying other components that are not visible but are required for the connection of the gear 18 to the delivery shaft 3.

Preferably, the coupling means 19 further comprise an actuator 22 acting upon the synchronization member 20 for shifting the latter between said non-operating and operating positions.

More to the point, the actuator 22 comprises a connection element 23 connected directly to the synchronization member 20. In detail, the connection element 23 is connected to said sleeve 21 of the synchronization member 20.

In the described embodiment, the connection element 23 is a fork whose prongs envelop the sleeve 21. In particular, a recess 24 housing said prongs of the fork is obtained on a lateral surface 21a of the sleeve 21.

The actuator 22 further comprises a hydraulic piston 25 connected to the connection element 23. The hydraulic piston 25 is mounted coaxially to a guide pin 26 and is actuated by a hydraulic circuit (the hydraulic power steering system for instance) not shown in the figures. The connection element 23 is also mounted coaxially to the guide pin 26.

The piston 25 shifts the connection element 23 and the sleeve 21 of the synchronization member 20 from the non-operating position to the operating position.

Moreover, the actuator 22 comprises return elastic means 27 for shifting the connection element 23 from the operating position to the non-operating position.

In the described embodiment, said elastic means 27 comprise a helical spring 28 coaxially mounted around said guide pin 26.

The guide pin 26 is supported and kept in position between the housing body 9 and a closing cap 29 mounted onto the housing body 9.

In further detail, the guide pin 26 has a first end 26a connected to the first shell 30 of the housing body 9 and a second end 26b engaged to said cap 29, fastened to second shell 31. Advantageously, the cap 29 can be easily removed so as to access the coupling means 19 and enable the required inspection and/or maintenance operations.

The transmission means 7, which selectively connect the actuation member 2 to the delivery shaft 3, could obviously be made also in several other ways designed to this purpose, such as with a multiple disc clutch, with a simple connection sleeve (which would enable a coupling only in still condition) or with other known similar mechanisms.

The power take-off unit 1 further comprises a sensor 39 for signaling the arrangement taken by the coupling means 19.

In detail, the sensor 39 comprises a slider 40 that can be translated in a vertical direction inside a sliding seat obtained in the half-shell 30 and facing said connection element 23. Said slider 40 rests onto a lateral surface 23a of said connection element 23. The lateral surface 23a of the connection element 23 comprises two flat portions placed at different heights and an inclined connection portion.

During use, when the slider 40 rests onto the higher portion of the lateral surface 23a of the connection element 23 (the latter being in the closest operating position to the first end 26a of the pin 26), the sensor 39 signals that the first operating arrangement of the coupling means 19 has been reached. Analogously, when the slider 40 rests onto the lower portion of the lateral surface 23a of the connection element 23 (the latter being in the closest operating position to the second end 26b of the pin 26), the sensor 39 signals that the second operating arrangement of the coupling means 19 has been reached.

The first 30 and the second half-shell 31 of the housing body 9 further support the delivery shaft 3 by means of a pair of further ball bearings 33.

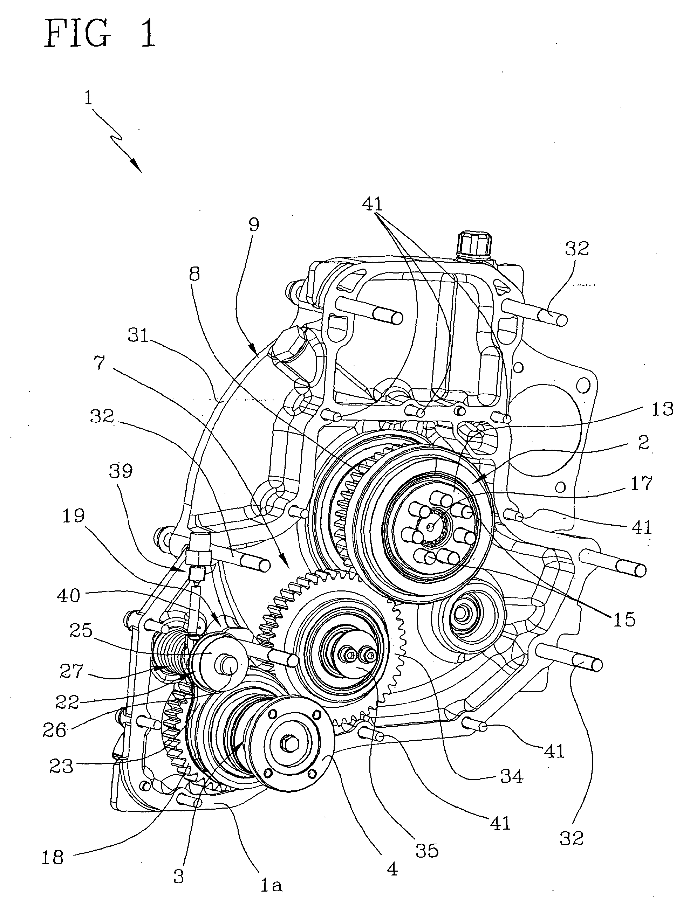

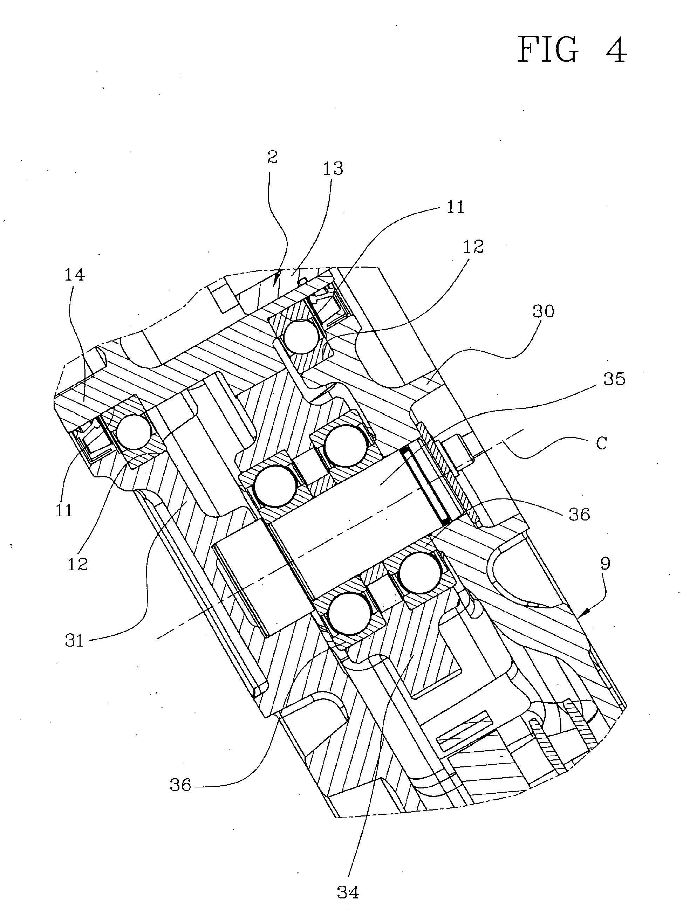

In the described embodiment, the transmission means 7 further comprise a secondary gear 34 for connecting the actuation member 2 to the gear 18. In detail, said secondary gear 34 engages directly the toothed crown 8 and said gear 18 (Figures 1 and 4). Said secondary gear 34 rotates around its own axis "C", preferably arranged parallel to axes "A" and "B". In detail, the secondary gear 34 is supported on a fixed central pin 35 by means of a pair of secondary ball bearings 36. The central pin 35 is fastened to the housing body 9.

Advantageously, the secondary gear 34 enables to transmit motion from the actuation member 2 to the delivery shaft 3 keeping the same direction of rotation.

In the preferred embodiment, the actuation member 2, the transmission means 7 and the coupling means 19 are immersed in an oil bath for an efficient lubrication.

The power take-off unit 1 further comprises cooling means 37 acting upon the housing body 9. As a matter of fact, friction generated during the movement of said components of the power take-off unit 1 heats up oil required for lubrication. Said heat should be efficiently removed by the cooling means 37.

Said cooling means 37 comprise a plurality of wings 38 obtained as one piece on an outer surface 9a of the housing body 9. Preferably, the wings 38 are obtained both on the first 30 and on the second shell 31 and are arranged close to a lower end 1a of the power take-off unit 1.

In an embodiment that is not shown, the power take-off unit 1 further comprises forced cooling means for a higher heat dissipation. By way of example, said forced cooling means comprise a fan generating an air flow directed against the housing body 9, especially against the cooling means 37.

Moreover, in an embodiment that is not shown, the power take-off unit 1 further comprises forced lubrication means. Said means comprise at least one pump and a plurality of nozzles through which lubricating oil is sprayed in the points where higher lubrication is required. It is also possible to create a forced oil circulation in a heat exchanger outside the device 1 so as to increase cooling efficiency.

The invention achieves the aims sets forth and has important advantages.

The power take-off unit 1 according to the present invention can draw a large fraction of mechanical power generated by the engine M or the whole of said power, and transfer it to the delivery shaft 3 with increased efficiency. It is thus possible to connect high-performance user devices to said power take-off unit 1.

Moreover, the power take-off unit 1 can deliver power when the engine is both still and running, and generates no potentially dangerous induced loads on the drive shaft.

Also maintenance operations necessary for the power take-off unit 1 are simplified since no adjustment of transmission means is required.

Moreover, the installation of the power take-off unit 1 on a vehicle is greatly simplified and is far less invasive and costly since no structural changes have to be carried out on components that are already installed on the vehicle. In particular, no cuts are necessary on gearbox or engine casings and the device can therefore be installed without substantially modifying the structure and the interconnections existing between gearbox and engine.

It should finally be pointed out that the direct connection of the engine to the gearbox through common mounting means and by simply placing the power take-off unit therebetween allows to keep the structural resistance of the assembly substantially unchanged and to keep a high compactness of the assembly.

## Claims

1. A power take-off unit for vehicles comprising:
- an actuation member (2) rotatable around an axis of rotation (A), associable coaxially to a drive shaft of an engine (M) so as to transmit to said actuation member (2) a rotational motion;
- a power delivery shaft (3) operatively connected to the actuation member (2) and connectable to a user device so as to actuate the latter;
- transmission means (7) for transmitting the rotational motion from the actuation member (2) to the delivery shaft (3);
said actuation member (2) comprising on one first side means for fastening (15) to said drive shaft, and on a second side, coaxial and opposed to the first side, second means for fastening (16) to a gearbox (C) of said engine.

2. The power take-off unit according to claim 1, **characterized in that** it is placed between said engine (M) and said gearbox (C), and **in that** is comprises mounting means (32) designed to fasten the engine (M) directly to the gearbox (C).

3. The power take-off unit according to claims 1 or 2, **characterized in that** said actuation member (2) has a basically cylindrical shape and comprises a toothed crown (8) placed on a lateral surface (2a) so as to connect said actuation member (2) to the transmission means (7).

4. The power take-off unit according to claim 3, **characterized in that** said actuation member (2) is turnably engaged to a housing body (9) along at least one portion of said lateral surface (2a) so as to transfer to said housing body (9) mechanical stresses from said transmission means (7).

5. The power take-off unit according to claim 4, **characterized in that** it comprises at least one ball bearing (10), preferably two of them, each acting between a respective shoulder (11) obtained on the lateral surface (2a) of the actuation member (2) and a respective housing seat (12) obtained on said housing body (9), the shoulders (11) being shaped with mirror symmetry with respect to a plane perpendicular to said axis of rotation (A) of the actuation member (2) so as to prevent the latter from shifting in a direction parallel to said axis (A).

6. The power take-off unit according to claim 4 or 5, **characterized in that** the actuation member (2) comprises a first portion (13) associable to the drive shaft by way of said first fastening means (15), and a second portion (14) separate from the first portion (13) and connected and coaxial to the first portion (13), associable to said gearbox (C) by way of said second fastening means (16).

7. The power take-off unit according to claim 6, **characterized in that** the second portion (14) comprises the toothed crown (8) and the shoulders (11) for housing the bearings (10).

8. The power take-off unit according to claim 6 or 7, **characterized in that** said actuation member (2) further comprises a grooved shaft (17) for connecting the first (13) to the second portion (14) and transmit a rotational motion.

9. The power take-off unit according to any one of the preceding claims, **characterized in that** the transmission means (7) are designed to selectively connect and disconnect the actuation member (2) to and from the delivery shaft (3).

10. The power take-off unit according to the preceding claim, **characterized in that** the transmission means (7) comprise a gear (18) coaxial to the delivery shaft (3) and selectively associable to the latter; said gear (18) being operatively connected to the actuation member (2).

11. The power take-off unit according to claim 10, **characterized in that** it further comprises coupling means (19) mobile between a first arrangement in which the gear (18) and the delivery shaft (3) are disengaged from one another and a second arrangement in which the gear (18) and the delivery shaft (3) are engaged by way of said coupling means (19).

12. The power take-off unit according to claim 11, **characterized in that** the coupling means (19) comprise a synchronization member (20) for synchronizing the motion of the delivery shaft (3) to the motion of the gear (18), which is mobile between a non-operating position corresponding to said first arrangement and an operating position corresponding to said second arrangement, and further comprise an actuator (22) acting upon the synchronization member (20) for shifting the latter between said operating position and said non-operating position.

13. The power take-off unit according to claim 12, **characterized in that** the actuator (22) comprises a connection element (23) connected to the synchronization member (20) and a hydraulic piston (25) acting upon the connection element (23) for shifting the synchronization member (20) from said non-operating position to said operating position, and further comprises return elastic means (27) acting upon the connection element (23) for shifting the synchronization member (20) from said operating position to said non-operating position.

14. The power take-off unit according to claim 10, **characterized in that** the transmission means (7) further comprise a secondary gear (34) placed between said toothed crown (8) and said gear (18).

15. The power take-off unit according to claim 14, **characterized in that** the delivery shaft (3) comprises a grooved portion (6) obtained close to said first end (3a) of the delivery shaft (3) for coupling said connection flange (4) to said delivery shaft (3).

16. The power take-off unit according to any one of the preceding claims, **characterized in that** it further comprises cooling means (37) acting upon a housing body (9).

17. A vehicle engine comprising a drive shaft, a gearbox (C) and a power take-off unit according to any one of the claims 1 to 16, connected to and placed between said drive shaft and said gearbox (C).

18. A vehicle comprising an engine according to the preceding claim.
